# EUROPÄISCHE PATENTSCHRIFT

(11) **EP 3 209 891 B1**
(45) Veröffentlichungstag und Bekanntmachung des Hinweises auf die Patenterteilung: **29.07.2020**
(21) Anmeldenummer: 15775382.3
(22) Anmeldetag: 06.10.2015
(51) Int. Cl.: F16B 13/08

(54) **KIPPDÜBEL UND VERFAHREN ZUR MONTAGE EINES KIPPDÜBELS**
TOGGLE FASTENER AND METHOD FOR MOUNTING A TOGGLE FASTENER
CHEVILLE À BASCULE ET SON PROCÉDÉ DE MONTAGE

(30) Priorität: 24.10.2014 DE 102014015679
(43) Veröffentlichungstag der Anmeldung: 30.08.2017
(73) Patentinhaber: fischerwerke GmbH & Co. KG, 72178 Waldachtal (DE)
(72) Erfinder: DALY, Aaron, 72285 Pfalzgrafenweiler (DE)
(86) Internationale Anmeldenummer: PCT/EP2015/001955
(87) Internationale Veröffentlichungsnummer: WO 2016/062372

(56) Entgegenhaltungen:
- WO-A1-80/00734
- WO-A1-86/04394
- CH-A- 550 949
- FR-A- 1 175 798
- FR-A1- 2 715 684
- GB-A- 182 293
- US-A1- 2011 225 793
- US-A1- 2011 268 528
- US-B1- 6 318 971

## Beschreibung

Die Erfindung betrifft einen Kippdübel mit den Merkmalen des Oberbegriffs des Anspruchs 1 sowie ein Verfahren zur Montage eines Kippdübels nach Anspruch 7.

Aus der Patentschrift DE 1 121 792 ist ein gattungsgemäßer Kippdübel bekannt. Der Kippdübel dient zur Befestigung eines Gegenstandes an einem dünnwandigen Bauteil. Ein "dünnwandiges" Bauteil ist beispielsweise eine Gipskartonplatte, wie sie im Trockenbau beispielsweise zur Herstellung von Wänden und zur Verkleidung von Decken Verwendung findet. Ein "dünnwandiges" Bauteil kann aber beispielsweise auch die Wandung eines Hochlochziegels oder die einer Sanitärkeramik sein. Im verbauten Zustand ist die Rückseite des Bauteils im Regelfall nicht zugänglich, sondern es befindet sich ein Hohlraum hinter dem Bauteil. Ist das Bauteil beispielsweise eine Gipskartonplatte und soll ein Gegenstand daran befestigt werden, wird die Gipskartonplatte zunächst durchbohrt und durch das Bohrloch wird ein Balken des Kippdübels in den Hohlraum hinter der Platte eingebracht. Der Balken ist bei dem aus der Patentschrift DE 1 121 792 bekannten Kippdübel als ein entlang einer Balkenlängsachse lang gestrecktes quaderförmiges Bauteil aus Kunststoff ausgeführt, das mittig eine Durchgangsöffnung zur Aufnahme einer Holzschraube aufweist. Mit dem Balken ist ein Band einstückig verbunden, mit dem der Balken im Hohlraum gehalten und positioniert werden kann. Der Balken wird mit dem Band gegen die Rückseite der Platte gezogen, so dass der Balken mit seiner Tragseite an der Platte anliegt und mit einer am Band angeordnete Hülse gegen die Platte verspannt. Der Gegenstand kann nun mit einer Schraube, die in die Durchgangsöffnung eingeschraubt wird, am Balken befestigt werden.

Aufgabe der Erfindung ist, einen alternativen Kippdübel zu schaffen, dessen Montage anwenderfreundlich ist.

Diese Aufgabe wird erfindungsgemäß durch einen Kippdübel mit den Merkmalen des Anspruchs 1 sowie durch ein Verfahren zur Montage eines Kippdübels mit den Merkmalen des Anspruchs 7 gelöst. Der erfindungsgemäße Kippdübel zur Befestigung eines Gegenstandes an einem dünnwandigen Bauteil, beispielsweise an einer Gipskartonplatte, weist einen Balken und mindestens ein Band auf. Der Balken ist entlang einer Balkenlängsachse lang gestreckt, d.h. er kann durch einen Körper, insbesondere durch einen Quader umschrieben werden, der in einer Dimension, der Länge in Richtung der Balkenlängsachse, um ein Mehrfaches größer ist, als in den beiden anderen Dimensionen, der Höhe und der Breite, die orthogonal zueinander und orthogonal zur Balkenlängsachse verlaufen. Der Balken weist eine Öffnung zur Aufnahme einer Schraube auf, die insbesondere als Durchgangsöffnung ausgeführt ist und sich entlang einer Öffnungslängsachse erstreckt, die quer, insbesondere im Wesentlichen orthogonal, zur Balkenlängsachse verläuft. Befindet sich der Balken des Kippdübels im eingebauten Zustand in einem Hohlraum hinter dem Bauteil, so ist die Öffnungslängsachse derart orientiert, dass eine Schraube durch das Bauteil hindurch in die Öffnung eingeführt werden kann. Die Schraube, beispielsweise eine Holzschraube oder eine Schraube mit metrischem Gewinde, kann direkt in der Öffnung oder in einem gesonderten Befestigungselement des Kippdübels befestigt werden. Das mit dem Balken verbundene Band dient zum Halten und zur Positionierung des Balkens bei der Montage. Das Band ist insbesondere lang gestreckt und insbesondere biegesteif aus Kunststoff hergestellt. Es ist insbesondere in sich biegesteif, aber beweglich am Balken befestigt. Insbesondere kann der Balken zum Einführen in ein Bohrloch gegenüber dem Balken gekippt werden. Um den Balken möglichst genau positionieren zu können, ist an dem Ende des Bandes, das dem Balken abgewandt ist, ein Griffelement angeordnet.

Um einem Verwender eine möglichst einfache und intuitive Handhabung des erfindungsgemäßen Kippdübels zu ermöglichen, ist das Griffelement des erfindungsgemäßen Kippdübels lang gestreckt. "Lang gestreckt" bedeutet hier, dass der Querschnitt des Griffelements klein im Verhältnis zu seiner Länge ist. Insbesondere beträgt die Länge des Griffelements ein Mehrfaches seines Durchmessers. "Ein Mehrfaches" bedeutet hier mindestens das Zweifache, insbesondere das Drei- oder Vierfache. Mit "Durchmesser" ist der Durchmesser eines den Querschnitt des Griffelements umschreibenden Umkreises gemeint. Zudem steht das Griffelement gegenüber der Bandlängsachse geneigt vom Band ab. Das bedeutet, dass das Griffelement einen seitlich vom Band abstehenden und lang gestreckten Handgriff bildet, was insbesondere ein Drehen des Kippdübels um die Bandlängsachse vereinfacht. Zudem kann ein derartiges Griffelement zum Ertasten einer Störgeometrie in einem Verfahren nach Anspruch 7 verwendet werden.

"Lang gestreckt" bedeutet aber nicht, dass das Griffelement zwangsläufig gerade gestreckt sein muss. Beispielsweise ist das Griffelement in einer bevorzugten Ausgestaltungsform des erfindungsgemäßen Kippdübels bogenförmig gekrümmt, wodurch es gut zu halten und zu bewegen ist.

Bei einer alternativen Ausgestaltungsform des erfindungsgemäßen Kippdübels ist das Griffelement kragarmförmig ausgebildet, wobei das Griffelement insbesondere gerade und rechtwinklig vom Band absteht. Bei dieser Ausgestaltungsform ist das Griffelement vorzugsweise parallel zur Balkenlängsachse, wenn die Bandlängsachse orthogonal zur Balkenlängsachse verläuft. Diese Ausgestaltungsform des Kippdübels ist nicht nur gut mit der Hand zu fassen, zu halten und zu bewegen, sie ist zudem auch dann als Lehre zum Ertasten einer Störgeometrie in einem Verfahren nach Anspruch 7 verwendbar, wenn ein Hohlraum hinter einem dünnwandigen Bauteil, in den das Griffelement als Lehre eingeführt werden soll, nur eine geringe Tiefe aufweist.

Weiterhin ist bevorzugt, dass an dem Band eine Hülse zum Sichern des Kippdübels am Bauteil angeordnet ist. Die Hülse weist eine Durchführöffnung für das Band auf, deren Querschnitt mit dem Querschnitt des Griffelements korrespondiert, derart, dass die Hülse über das Griffelement geschoben werden kann. Die Durchführöffnung weist insbesondere einen Querschnitt auf, der dem Querschnitt des Griffelements im Wesentlichen entspricht. Am Griffelement und/oder am Band kann ein Verliersicherungselement vorgesehen sein, das ein unbeabsichtigtes Lösen der Hülse vom Band oder dem Griffelement verhindert. Das Verliersicherungselement kann beispielsweise als elastisches Federelement ausgestaltet sein, das ein Aufschieben der Hülse auf das Griffelement und das Band zulässt, aber eine Bewegung der Hülse in entgegengesetzter Richtung blockiert Die Hülse kann somit auf eine einfache Art und Weise am Band vormontiert werden.

Vorzugsweise ist die Durchführöffnung derart gestaltet, dass sie das Band umgreift, insbesondere vollständig umschließt, wodurch die Hülse nicht seitlich, sondern nur durch eine Bewegung in Bandlängsrichtung bzw. in Längsrichtung des Griffelements vom Band bzw. Griffelement aufgeschoben oder entfernt werden kann. Hierzu kann an der Hülse beispielsweise ein ringförmiges Element, insbesondere einen Bund vorgesehen sein.

Erfindungsgemäß weist das freie Ende des Griffelements einen Abstand vom Band auf, der mindestens dem Abstand des Bands zu dem in Richtung der Balkenlängsachse nächstliegenden ersten Ende des Balkens entspricht. Damit ist gewährleistet, dass das Griffelement eine ausreichende Länge aufweist, so dass es im Verfahren nach Anspruch 7 als Lehre zum Ertasten von möglichen Störgeometrien verwendet werden kann. Insbesondere ist der Abstand vom freien Ende des Griffelements zum Band größer als die halbe Länge des Balkens.

Zur Montage des erfindungsgemäßen Kippdübels wird zunächst ein Bohrloch in einem dünnwandigen Bauteil erstellt. Dann wird das Griffelement in das Bohrloch eingeführt, derart, dass das Griffelement das dünnwandige Bauteil hintergreift und sich in einem Hohlraum hinter dem Bauteil befindet. Der Hohlraum kann leer oder beispielsweise durch einen kompressiblen Dämmstoff aufgefüllt sein, wie dies im Trockenbau bei Trennwänden üblich ist. Das Griffelement und das Band sind jeweils biegesteif, insbesondere zudem biegesteif miteinander verbunden, und fest genug ausgeführt, dass eine im Trockenbau übliche Dämmung, wie beispielsweise Glas- oder Steinwolle, mit dem Griffelement verdrängt werden kann. Nun wird das Band derart bewegt, dass sich das Griffelement im Hohlraum bewegt und eine mögliche, sich im Hohlraum befindliche Störgeometrie mit dem Griffelement ertastet werden kann. Eine Störgeometrie kann beispielsweise ein Kabel, eine Rohrleitung, einen Holzlatte, ein Metallprofil oder Mauerwerk sein. Wird eine Störgeometrie ertastet, so weiß der Anwender, dass eine Störgeometrie vorhanden ist und wo diese liegt. Nach dem Entfernen des Bands und des Griffelements aus dem Bohrloch kann der Balken des Kippdübels in den Hohlraum eingebracht werden, derart, dass der Balken das Bauteil hintergreift. Dabei kann die im Balken befindliche Öffnung insbesondere im Bereich des Bohrlochs liegen, so dass eine Schraube durch die Bohrung in die Öffnung eingeführt werden kann. Da die Lage einer möglichen Störgeometrie durch das Ertasten bekannt ist, kann der Balken so ausgerichtet werden, dass die Störgeometrie die planmäßige Anlage des Balkens des Kippdübels an dem dünnwandigen Bauteil nicht stört und der Kippdübel an dem Bauteil befestigt werden kann. Nachfolgend kann eine am Griffelement oder am Band angeordnete Hülse am Band entlang zum Bauteil hin verschoben und mittels der Hülse der Balken gegen das Bauteil verspannt werden. Durch Einschrauben einer Schraube in der Öffnung des Balkens wird dann der Gegenstand am Bauteil befestigt, insbesondere in dem der Gegenstand am Bauteil angelegt und durch das Einschrauben der Schraube mit dem Balken gegen das Bauteil verspannt wird.

Zum Ertasten der Störgeometrie wird das Band vorzugsweise in einer Rotation um die Bandlängsachse oder einer zur Bandlängsachse parallelen Achse bewegt.

Insbesondere ist bevorzugt, dass das Band entlang der Bohrlochwand bewegt wird und dabei insbesondere um 360 Grad um die Bandlängsachse gedreht wird. Das freie Ende des Griffelements bewegt sich somit im Wesentlichen auf einer Kreisbahn oder auf einer Bahn, die einer Kreisbahn ähnlichen ist, und ertastet somit den gesamten Bereich, in dem der Balken am Bauteil zur Anlage gelangen könnte.

Bei einem plattenförmigen, ebenen Bauteil kann die Bewegung insbesondere in einer zum Bauteil parallelen Ebene und/oder innerhalb eines zylinderförmigen Volumens erfolgen.

Die Erfindung wird nachfolgend anhand von zwei in der Zeichnung dargestellten Ausführungsbeispielen näher erläutert.

Es zeigen:
- Figur 1: einen ersten erfindungsgemäßen Kippdübel während der Montage an einem Bauteil in einer teilweise geschnittenen Ansicht;
- Figur 2: einen zweiten erfindungsgemäßen Kippdübel, bei dem das Griffelement in ein Bohrloch eines Bauteils eingeführt ist, in einer teilweise geschnittenen Ansicht;
- Figur 3: den zweiten erfindungsgemäßen Kippdübel nach dem Einführen des Griffelements in einen hinter dem Bauteil liegenden Hohlraum in einer perspektivischen Darstellung; und
- Figur 4: den zweiten erfindungsgemäßen Kippdübel in einem eingebauten Zustand in einer Schnittdarstellung entlang der Achse IV-IV aus Figur 3.

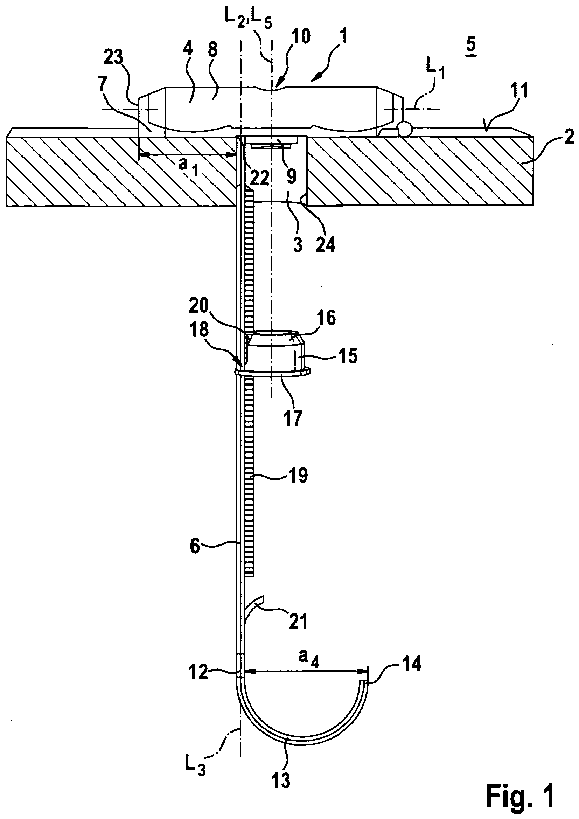

Die Figur 1 zeigt einen ersten erfindungsgemäßen Kippdübel 1 während der Montage des Kippdübels 1 an einem dünnwandigen Bauteil 2, hier einer Gipskartonplatte. In dem Bauteil 2 ist ein Bohrloch 3 erstellt worden, durch das ein Balken 4 des Kippdübels 1 in einem hinter dem Bauteil 2 befindlichen Hohlraum 5 eingebracht worden ist, so dass der Balken 4 das Bauteil 2 hintergreift. Der Kippdübel 1 umfasst den Balken 4 und ein Band 6. Der Balken 4 ist entlang einer Balkenlängsachse L₁ lang gestreckt, seine Länge ist also um ein Mehrfaches größer, als seine Breite oder Höhe. Das Band 6 ist über eine Verbindungsstelle 22 einstückig, aber beweglich mit einem Anlagekörper 7 des Balkens 4 verbunden und gemeinsam mit dem Anlagekörper 7 aus einem Polyamid im Spritzgussverfahren hergestellt. Der Anlagekörper 7 liegt auf der Rückseite 11 des ebenen, plattenförmigen Bauteils 2 an und bildet gemeinsam mit einem Tragkörper 8 den Balken 4. Der steife Tragkörper 8 ist aus einem faserverstärkten Polyamid hoher Festigkeit hergestellt und mit dem Anlagekörper 7 durch Rastelemente (nicht dargestellt) verliersicher verbunden. Im Tragkörper 8 ist mittig eine Schraubhülse 9 ausgebildet, die den Anlagekörper 7 durchdringt und eine als Durchgangsöffnung ausgebildete Öffnung 10 umschließt. Die Öffnung 10 erstreckt sich normal zur ebenen Rückseite 11 des Bauteils 2 und quer zur Balkenlängsachse L₁ entlang einer Öffnungslängsachse L₂. Der Balken 4 ist so ausgerichtet, dass die Öffnungslängsachse L₂ mit der Längsachse L₅ des Bohrlochs zusammenfällt. Die Öffnung 10 dient zur Aufnahme einer Schraube (nicht dargestellt) mit der ein Gegenstand (nicht dargestellt) an dem Bauteil 2 befestigt werden kann.

Das Band 6 ist ebenfalls lang gestreckt. Es erstreckt sich entlang einer Bandlängsachse L₃. Das Band 6 dient zum Halten und zur Positionierung des Balkens 4, so dass er auf der Rückseite 11 des Bauteils 2 bewegt und ausgerichtet werden kann. An dem dem Balken 4 abgewandten Ende 12 des Bands 6 ist ein Griffelement 13 angeordnet, an dem der Kippdübel 1 gehalten, bewegt und positioniert werden kann. Das Griffelement 13 ist ebenfalls lang gestreckt, d.h. es weist einen Querschnitt auf, der mit einem Umkreis umschrieben werden kann, dessen Durchmesser um ein Vielfaches kleiner ist, als das Griffelement 13 lang ist. Das Griffelement 13 ist gegenüber der Bandlängsachse L₃ bogenförmig gekrümmt, in Form eines halben Kreisbogens, und weist ein freies Ende 14 auf, dessen Abstand a₄, die Strecke vom Band 6 zu der dem Band 6 abgewandten Seite des freien Endes 14, mindestens dem Abstand a₁ vom Band 6 zu dem in Richtung der Balkenlängsachse L₁ nächstliegenden ersten Ende 23 des Balkens 4 entspricht.

Das derartig gestaltete Griffelement 13 lässt sich von einem Anwender gut halten und manipulieren. Ein weiterer Vorteil ist, dass eine an dem Band 6 angeordnete Hülse 15 zum Sichern des Kippdübels 1 am Bauteil 2 durch einfaches Aufschieben auf das Griffelement 13 und das Band 6 montiert und mit dem Kippdübel 1 verbunden werden kann. Die Hülse 15 umfasst eine Einführschräge 16 und einen Bund 17 und weist eine Durchführöffnung 18 für das Griffelement 13 und das Band 6 auf, deren Querschnitt zu dem Querschnitt des Griffelements 13 und dem Querschnitt des Bands 6 korrespondiert. Das bedeutet, dass die Durchführöffnung 18 derart ausgebildet ist, dass die Hülse 6 über das Griffelement 13 auf das Band 6 geschoben werden kann. Die Durchführöffnung 18 der Hülse 15 ist derart gestaltet, dass sie das Griffelement 13 und das Band 6 umgreift und vollständig mit dem ringförmigen Bund 17 umschließt. Am Band 6 ist eine Zahnstange 19 angeordnet, in die Rastelemente 20 der Hülse 15 eingreifen, die in der Durchführöffnung 18 angeordnet sind und ein ungewolltes Verschieben der Hülse 15 am Band 6 verhindern. Im Bereich des dem Balken 4 abgewandten Endes 12 des Bands 6 ist zudem eine Federzunge 21 angeordnet, die als Verliersicherungselement ein Aufschieben der Hülse 15 auf das Band 6 ermöglicht, ein unbeabsichtigtes Entfernen der Hülse 15 vom Band 6 aber verhindert.

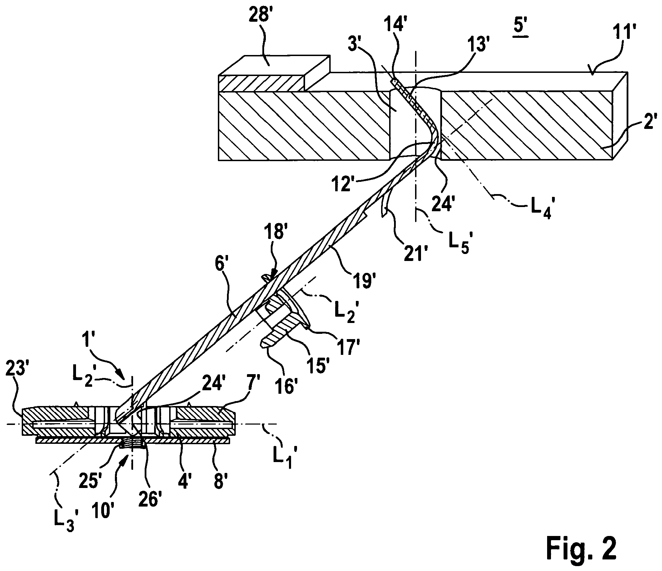

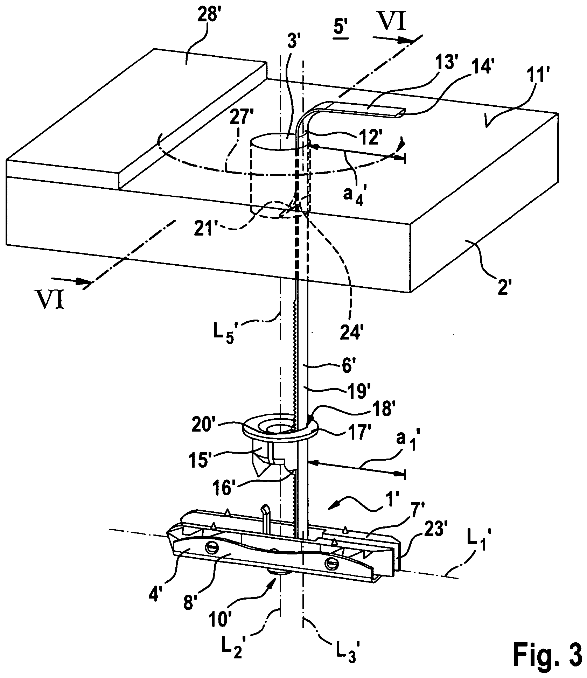

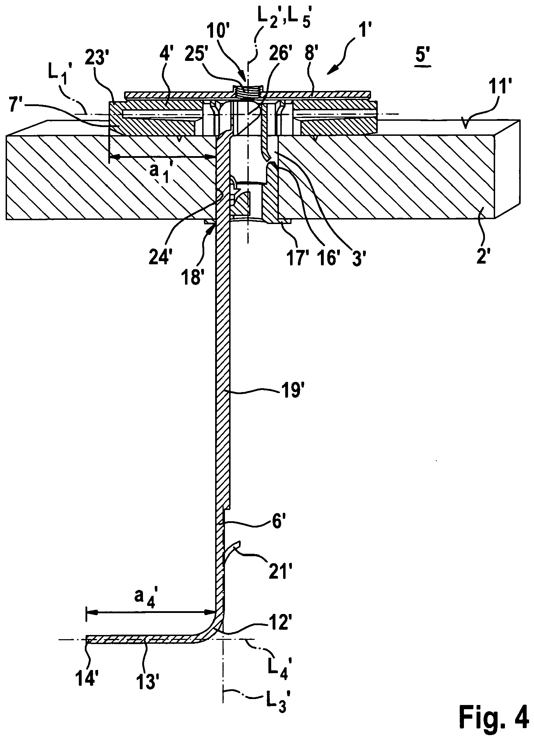

Auch bei diesem ersten erfindungsgemäßen Kippdübel 1 lässt sich das Griffelement 13 als Lehre zum Ertasten einer sich möglicherweise im Hohlraum 5 befindlichen Störgeometrie verwenden, wie dies für einen zweiten erfindungsgemäßen Kippdübel 1' in den Figuren 2 bis 4 dargestellt und nachfolgend beschrieben ist: Der zweite erfindungsgemäße Kippdübel 1' zur Befestigung eines Gegenstandes (nicht dargestellt) an einem dünnwandigen Bauteil 2' weist ebenfalls einen Balken 4', der sich entlang einer Balkenlängsachse L₁' erstreckt und lang gestreckt ist, und ein Band 6' auf. Der Balken 4' besteht aus einem U-förmigen Tragkörper 8' aus Stahl, in dem ein Anlagekörper 7' aus Kunststoff einliegt. In dem Balken 4' ist eine Öffnung 10' ausgebildet, die zur Aufnahme einer Schraube (nicht dargestellt) dient und sich quer, genauer im Wesentlichen orthogonal zur Balkenlängsachse L₁' entlang einer Öffnungslängsachse L₂' erstreckt. Um eine Schraube mit dem Balken 4' zugfest verbinden zu können, ist die Öffnung 10' im Tragkörper 8' als Gewinde 25' für eine metrische Schraube ausgeführt. Das Band 6' ist über ein als Verbindungsstelle 22' wirkendes Drehlager 26' mit dem Balken 4' derart verbunden, dass der Balken 4' relativ zum Band 6' gekippt werden kann. Das Band 6' erstreckt sich entlang einer Bandlängsachse L₃' und dient ebenfalls zum Halten und zur Positionierung des Balkens 4' bei der Montage des Kippdübels 1' am Gegenstand 2'. An dem Band 6' sind, wie bei dem in Figur 1 dargestellten ersten erfindungsgemäßen Kippdübel 1, eine Hülse 15', eine Zahnstange 19', sowie eine Federzunge 21' angeordnet, die in ihrer Ausbildung und Funktion mit den entsprechenden Bauteilen des ersten Kippdübels 1 übereinstimmen. An seinem dem Balken 4' abgewandten Ende 12' ist am Band 6' zudem ebenfalls ein Griffelement 13' angeordnet, das lang gestreckt und kragarmförmig ausgebildet ist und gegenüber der Bandlängsachse L₃' geneigt, in diesem Fall im Wesentlichen gerade und rechtwinklig vom Band 6' absteht. In den Figuren 3 und 4 ist zu erkennen, dass das Griffelement 13' derart ausgebildet ist, dass es parallel zur Balkenlängsachse L₁' ist, wenn die Bandlängsachse L₂' orthogonal zur Balkenlängsachse L₁' verläuft. Das Griffelement 13' ist wie beim ersten erfindungsgemäßen Kippdübel 1 der Figur 1 so lang, dass das vom Band 6' abgewandte freie Ende 14' des Griffelements 13' einen Abstand a₄' vom Band 6' aufweist, der mindestens dem Abstand a₁' des Bands 6' von dem in Richtung der Balkenlängsachse L₁' nächstliegenden Ende 23' entspricht.

Zur Montage des erfindungsgemäßen Kippdübels 1' wird zunächst ein Bohrloch 3' in dem dünnwandigen Bauteil 2', hier einer Gipskartonplatte, erstellt. Dann wird das Griffelement 13' in das Bohrloch 3' eingeführt, wie dies in Figur 2 zu sehen ist, und zwar so weit, dass das Griffelement 13' das dünnwandige Bauteil 2' hintergreift und in einem Hohlraum 5' hinter dem Bauteil 2' liegt. Nun kann das Band 6' so an der Bohrlochwand 24' entlang bewegt werden, dass das Band 6' um die Bandlängsachse L₃' und die Längsachse L₅' des Bohrlochs 3' rotiert, die parallel zur Bandlängsachse L₃' verläuft. Dabei wird das Griffelement 14' im Hohlraum 5' bewegt. Das freie Ende 14' des Griffelements 13' wird dabei auf einer Kreisbahn 27' bewegt. Da der Abstand a₄' des freien Endes 14' des Griffelements 13' vom Band 6' mindestens so groß ist, wie der Abstand a₁' des ersten Endes 23' des Balkens 4' vom Band 6', wird das Griffelement 13' in dem Volumen bewegt, indem der Balken 4' zum Liegen kommt, wenn er nach dem Entfernen des Griffelements 13' aus dem Hohlraum 5' und dem Einbringen des Balkens 4' in den Hohlraum 5' das Bauteil 2' hintergreift. Trifft das Griffelement 13' beim Bewegen auf eine Störgeometrie 28', hier einer Latte aus Holz, so weiß der Anwender, dass er den Balken 4' des Kippdübels 1' nach dem Einführen in den Hohlraum 5' entsprechend ausrichten muss, so dass die Störgeometrie 28' die Anlage des Balkens 4' am Bauteil 2' nicht behindert, wie dies die Figur 4 zeigt. Die Montage des erfindungsgemäßen Kippdübels 1' ist somit einfach und sicher möglich.

Zum Befestigen des Kippdübels 1' wird nach dem Ausrichten des Balkens 4' im Hohlraum 5' die Hülse 15' entlang des Bands 6' zum Balken 4' hin bewegt und mit der Einführschräge 16' voraus in das Bohrloch 3' eingeführt, bis der Bund 17' am Bauteil 2' anliegt. Der Bund 17' kann nun mittels der Zahnstange 19' und den Rastelementen 20' gegen den Balken 4' verspannt werden, wie dies in Figur 4 zu sehen ist. Nachfolgend kann der über die Hülse 15' und das Bauteil 2' überstehende Teil des Bands 6' abgeschnitten oder abgebrochen werden, so dass es ein Aufsetzen eines Gegenstands auf den Bund 17' bzw. das Bauteil 2' nicht behindert. Der Gegenstand kann dann mit einer Schraube am Kippdübel 1' befestigt und gegen das Bauteil 2' verspannt werden.

### Bezuaszeichenliste

### Kippdübel und Verfahren zur Montage eines Kippdübels

- 1, 1': Kippdübel
- 2, 2': Bauteil
- 3, 3': Bohrloch
- 4, 4': Balken
- 5, 5': Hohlraum
- 6, 6': Band
- 7, 7': Anlagekörper
- 8, 8': Tragkörper
- 9: Schraubhülse
- 10, 10': Öffnung
- 11, 11': Rückseite des Bauteils 2, 2'
- 12, 12': dem Balken 4, 4' abgewandtes Ende des Bands 6, 6'
- 13, 13': Griffelement
- 14, 14': freies Ende des Griffelements 13, 13'
- 15, 15': Hülse
- 16, 16': Einführschräge
- 17, 17': Bund
- 18, 18': Durchführöffnung
- 19, 19': Zahnstange
- 20, 20': Rastelement
- 21, 21': Federzunge
- 22, 22': Verbindungsstelle
- 23, 23': erstes Ende des Balkens
- 24, 24': Bohrlochwand
- 25': Gewinde
- 26': Drehlager
- 27': Kreisbahn
- 28': Störgeometrie
- L₁, L₁': Balkenlängsachse
- L₂, L₂': Öffnungslängsachse
- L₃, L₃': Bandlängsachse
- L₄': Grifflängsachse
- L₅, L₅': Längsachse des Bohrlochs 3, 3'
- a₁, a₁': Abstand des freien Endes 14, 14' des Griffelements 13, 13' vom Band 6, 6'
- a₄,: Abstand des ersten Endes 23, 23' des Balkens 4, 4' vom Band 6, 6'

## Patentansprüche

1. Kippdübel (1, 1') zur Befestigung eines Gegenstandes an einem dünnwandigen Bauteil (2, 2'),
- mit einem Balken (4, 4'), der entlang einer Balkenlängsachse (L₁, L₁') lang gestreckt ist und eine Öffnung (10, 10') zur Aufnahme einer Schraube aufweist, wobei sich die Öffnung (10, 10') entlang einer Öffnungslängsachse (L₂, L₂') erstreckt, die quer zur Balkenlängsachse (L₁, L₁') verläuft, und
- mit mindestens einem Band (6, 6'), das mit dem Balken (4, 4') verbunden ist, sich entlang einer Bandlängsachse (L₃, L₃') erstreckt und zum Halten und zur Positionierung des Balkens (4, 4') bei der Montage dient, wobei an dem Band (6, 6'), an seinem dem Balken (4, 4) abgewandten Ende, ein Griffelement (13, 13') angeordnet ist,
wobei das Griffelement (13, 13') lang gestreckt ist und gegenüber der Bandlängsachse (L₃, L₃') geneigt vom Band (6, 6') absteht,
**dadurch gekennzeichnet,**
**dass** das freie Ende (14, 14') des Griffelements (13, 13') einen Abstand (a₁, a₁') vom Band (6, 6') aufweist, der mindestens dem Abstand (a₄, a₄') des Bands (6, 6') zu dem in Richtung der Balkenlängsachse (L₁, L₁') nächstliegenden ersten Ende (23, 23') des Balkens (4, 4') entspricht und dass das Griffelement (13, 13') zum Ertasten einer Störgeometrie in einem Verfahren nach Anspruch 7 verwendet werden kann.

2. Kippdübel nach Anspruch 1, **dadurch gekennzeichnet, dass** das Griffelement (13) bogenförmig gekrümmt ist.

3. Kippdübel nach Anspruch 1, **dadurch gekennzeichnet, dass** das Griffelement (13') kragarmförmig ausgebildet ist und insbesondere im Wesentlichen gerade und rechtwinklig vom Band (6') absteht.

4. Kippdübel nach Anspruch 3, **dadurch gekennzeichnet, dass** das Griffelement (13') parallel zur Balkenlängsachse (L₁') ist, wenn die Bandlängsachse (L₃') orthogonal zur Balkenlängsachse (L₁') verläuft.

5. Kippdübel nach einem der Ansprüche 1 bis 4, **dadurch gekennzeichnet, dass** an dem Band (6, 6') eine Hülse (15, 15') zum Sichern des Kippdübels (1, 1') am Bauteil (2, 2') angeordnet ist, mit einer Durchführöffnung (18, 18') für das Band (6, 6'), deren Querschnitt mit dem Querschnitt des Griffelements (13, 13') korrespondiert, derart, dass die Hülse (6, 6') über das Griffelement (13, 13') geschoben werden kann.

6. Kippdübel nach einem der Ansprüche 1 bis 5, **dadurch gekennzeichnet, dass** die Durchführöffnung (18, 18') derart gestaltet ist, dass sie das Band (6, 6') umgreift, insbesondere vollständig umschließt.

7. Verfahren zur Montage eines Kippdübels (1, 1') an einem dünnwandigen Bauteil (2, 2'), wobei der Kippdübel (1, 1') einen Balken (4, 4') und mindestens ein Band (6, 6') umfasst, und der Balken (4, 4') entlang einer Balkenlängsachse (L₁, L₁') lang gestreckt ist und eine Öffnung auf (10, 10') zur Aufnahme einer Schraube aufweist, wobei die Öffnung (10, 10') sich entlang einer Öffnungslängsachse (L₂, L₂') erstreckt, die quer zur Balkenlängsachse (L₁, L₁') verläuft, wobei das Band (6, 6'), das zum Halten und zur Positionierung des Balkens (4, 4') bei der Montage dient, mit dem Balken (4, 4') verbunden ist, wobei an dem Band (6, 6'), an seinem dem Balken (4, 4') abgewandten Ende (12, 12'), ein lang gestrecktes Griffelement (13, 13') angeordnet ist, das gegenüber der Bandlängsachse (L₃, L₃') geneigt vom Band (6, 6') absteht, wobei das Verfahren folgende Schritte umfasst:
a) Erstellen eines Bohrlochs (3, 3') im dünnwandigen Bauteil (2, 2');
b) Einführen des Griffelements (13, 13') in das Bohrloch (3, 3'), derart, dass das Griffelement (13, 13') das dünnwandige Bauteil (2, 2') hintergreift und sich in einem Hohlraum (5, 5') hinter dem Bauteil (2, 2') befindet;
c) Bewegen des Bands (6, 6') derart, dass das Griffelement (13, 13') im Hohlraum (5, 5') bewegt und eine mögliche Störgeometrie (28') mit dem Griffelement (13, 13') ertastet wird;
d) Entfernen des Bands (6, 6') und des Griffelements (13, 13') aus dem Bohrloch (3, 3'); und
e) Einbringen des Balkens (4, 4') in den Hohlraum (5, 5'), derart, dass der Balken (4, 4') das Bauteil (2, 2') hintergreift.

8. Verfahren nach Anspruch 7, **dadurch gekennzeichnet, dass** in Schritt c) das Band (6, 6') in einer Rotation um die Bandlängsachse (L₃, L₃') oder einer zur Bandlängsachse (L₃, L₃') parallelen Achse bewegt wird.

9. Verfahren nach Anspruch 8, **dadurch gekennzeichnet, dass** das Band (6, 6') entlang der Bohrlochwand (24, 24') bewegt wird.

## Claims

1. Toggle fixing (1, 1') for fixing an article to a thin-walled building component (2, 2'),
- having a crosspiece (4, 4') which is elongated along a crosspiece longitudinal axis (L₁, L₁') and has an opening (10, 10') for receiving a screw, the opening (10, 10') extending along an opening longitudinal axis (L₂, L₂') which runs transversely with respect to the crosspiece longitudinal axis (L₁, L₁'), and
- having at least one strip (6, 6') which is joined to the crosspiece (4, 4'), extends along a strip longitudinal axis (L₃, L₃') and serves for holding and positioning the crosspiece (4, 4') during mounting, a grip element (13, 13') being arranged on the strip (6, 6') at its end remote from the crosspiece (4, 4'), wherein the grip element (13, 13') is elongated and projects from the strip (6, 6') at an angle with respect to the strip longitudinal axis (L₃, L₃'),
**characterised in that**
the free end (14, 14') of the grip element (13, 13') is a distance (a₁, a₁') from the strip (6, 6') that corresponds at least to the distance (a₄, a₄') between the strip (6, 6') and the first end (23, 23') of the crosspiece (4, 4') which is the closest end in the direction of the crosspiece longitudinal axis (L₁, L₁'), and the grip element (13, 13') can be used to probe for obstructive geometry in a method according to claim 7.

2. Toggle fixing according to claim 1, **characterised in that** the grip element (13) is arcuately curved.

3. Toggle fixing according to claim 1, **characterised in that** the grip element (13') is of cantilever-like construction and especially projects from the strip (6') substantially in a straight line and at a right angle.

4. Toggle fixing according to claim 3, **characterised in that** the grip element (13') is parallel to the crosspiece longitudinal axis (L₁') when the strip longitudinal axis (L₃') runs orthogonally with respect to the crosspiece longitudinal axis (L₁').

5. Toggle fixing according to any one of claims 1 to 4, **characterised in that** on the strip (6, 6') there is arranged a sleeve (15, 15') for securing the toggle fixing (1, 1') against the building component (2, 2'), having a feed-through opening (18, 18') for the strip (6, 6'), the cross-section of which opening is complementary to the cross-section of the grip element (13, 13') in such a way that the sleeve (6, 6') can be pushed over the grip element (13, 13').

6. Toggle fixing according to any one of claims 1 to 5, **characterised in that** the feed-through opening (18, 18') is configured in such a way that it surrounds, especially entirely encompasses, the strip (6, 6').

7. Method of mounting a toggle fixing (1, 1') on a thin-walled building component (2, 2'), wherein the toggle fixing (1, 1') comprises a crosspiece (4, 4') and at least one strip (6, 6'), and the crosspiece (4, 4') is elongated along a crosspiece longitudinal axis (L₁, L₁') and has an opening (10, 10') for receiving a screw, the opening (10, 10') extending along an opening longitudinal axis (L₂, L₂') which runs transversely with respect to the crosspiece longitudinal axis (L₁, L₁'), the strip (6, 6'), which serves for holding and positioning the crosspiece (4, 4') during mounting, being joined to the crosspiece (4, 4'), wherein there is arranged on the strip (6, 6'), at its end (12, 12') remote from the crosspiece (4, 4'), an elongated grip element (13, 13') which projects from the strip (6, 6') at an angle with respect to the strip longitudinal axis (L₃, L₃'), the method comprising the following steps:
a) drilling a hole (3, 3') in the thin-walled building component (2, 2');
b) inserting the grip element (13, 13') into the drilled hole (3, 3') in such a way that the grip element (13, 13') engages behind the thin-walled building component (2, 2') and is located in a cavity (5, 5') behind the building component (2, 2');
c) moving the strip (6, 6') in such a way that the grip element (13, 13') moves in the cavity (5, 5') and any obstructive geometry (28') is probed with the grip element (13, 13');
d) removing the strip (6, 6') and the grip element (13, 13') from the drilled hole (3, 3'); and
e) introducing the crosspiece (4, 4') into the cavity (5, 5') in such a way that the crosspiece (4, 4') engages behind the building component (2, 2').

8. Method according to claim 7, **characterised in that** in step c) the strip (6, 6') is moved in rotation about the strip longitudinal axis (L₃, L₃') or an axis parallel to the strip longitudinal axis (L₃, L₃').

9. Method according to claim 8, **characterised in that** the strip (6, 6') is moved along the wall (24, 24') of the drilled hole.

## Revendications

1. Cheville basculante (1, 1') destinée à la fixation d'un objet à une partie structurelle (2, 2') à paroi mince, comprenant
- une barrette (4, 4') qui s'étend en longueur le long d'un axe longitudinal (L₁, L_{1'}) et comporte un orifice (10, 10') conçu pour recevoir une vis, lequel orifice (10, 10') s'étend le long d'un axe longitudinal (L₂, L₂') s'étendant transversalement par rapport audit axe longitudinal (L₁, L_{1'}) de la barrette, et
- au moins une bande (6, 6') qui est reliée à la barrette (4, 4'), s'étend le long d'un axe longitudinal (L₃, L₃), et sert à la retenue et au positionnement de ladite barrette (4, 4') au stade du montage, un élément de préhension (13, 13') étant implanté sur ladite bande (6, 6'), à son extrémité pointant à l'opposé de ladite barrette (4, 4'),
sachant que ledit élément de préhension (13, 13') s'étend en longueur et fait saillie avec inclinaison au-delà de la bande (6, 6'), par rapport à l'axe longitudinal (L₃, L₃) de ladite bande,
**caractérisée par le fait**
**que** l'extrémité libre (14, 14') de l'élément de préhension (13, 13') est espacée, de la bande (6, 6'), d'une distance (a₁, a_{1'}) qui correspond au moins à la distance (a₄, a₄') séparant ladite bande (6, 6') d'avec la première extrémité (23, 23') de la barrette (4, 4') qui occupe l'emplacement le plus proche dans la direction de l'axe longitudinal (L₁, L_{1'}) de ladite barrette ; et par le fait que ledit élément de préhension (13, 13') peut être utilisé pour le repérage d'une géométrie perturbatrice dans un procédé conforme à la revendication 7.

2. Cheville basculante selon la revendication 1, **caractérisée par le fait que** l'élément de préhension (13) présente une courbure en arc de cercle.

3. Cheville basculante selon la revendication 1, **caractérisée par le fait que** l'élément de préhension (13') est réalisé sous la forme d'un bras en porte-à-faux et fait notamment saillie, pour l'essentiel, en ligne droite et à angle droit au-delà de la bande (6').

4. Cheville basculante selon la revendication 3, **caractérisée par le fait que** l'élément de préhension (13') est parallèle à l'axe longitudinal (L_{1'}) de la barrette lorsque l'axe longitudinal (L₃) de la bande s'étend perpendiculairement audit axe longitudinal (L_{1'}) de la barrette.

5. Cheville basculante selon l'une des revendications 1 à 4, **caractérisée par le fait qu'**une douille (15, 15'), disposée sur la bande (6, 6') en vue d'arrêter ladite cheville basculante (1, 1') sur la partie structurelle (2, 2'), est munie d'un orifice de passage (18, 18') qui est affecté à ladite bande (6, 6') et dont la section transversale concorde avec la section transversale de l'élément de préhension (13, 13'), de façon telle que ladite douille (15, 15') puisse être enfilée au-dessus dudit élément de préhension (13, 13').

6. Cheville basculante selon l'une des revendications 1 à 5, **caractérisée par le fait que** l'orifice de passage (18, 18') est configuré de telle sorte qu'il entoure la bande (6, 6'), et la ceinture intégralement en particulier.

7. Procédé dévolu au montage d'une cheville basculante (1, 1') sur une partie structurelle (2, 2') à paroi mince, ladite cheville basculante (1, 1') comprenant une barrette (4, 4') et au moins une bande (6, 6'), laquelle barrette (4, 4') s'étend en longueur le long d'un axe longitudinal (L₁, L_{1'}) et comporte un orifice (10, 10') conçu pour recevoir une vis, ledit orifice (10, 10') s'étendant le long d'un axe longitudinal (L₂, L₂') qui s'étend transversalement par rapport audit axe longitudinal (L₁, L_{1'}) de la barrette, sachant que ladite bande (6, 6'), servant à retenir et à positionner ladite barrette (4, 4') au stade du montage, est reliée à ladite barrette (4, 4'), sachant qu'un élément de préhension (13, 13'), s'étendant en longueur, est implanté sur la bande (6, 6') à son extrémité (12, 12') pointant à l'opposé de ladite barrette (4, 4'), fait saillie avec inclinaison au-delà de la bande (6, 6'), par rapport à l'axe longitudinal (L₃, L₃) de ladite bande, ledit procédé incluant les étapes suivantes :
a) façonnage d'un trou foré (3, 3') dans la partie structurelle (2, 2') à paroi mince ;
b) insertion de l'élément de préhension (13, 13') dans ledit trou foré (3, 3'), de telle manière que ledit élément de préhension (13, 13') emprisonne par-derrière la partie structurelle (2, 2') à paroi mince et se trouve dans une cavité (5, 5'), derrière ladite partie structurelle (2, 2') ;
c) mise en mouvement de la bande (6, 6'), de telle sorte que ledit élément de préhension (13, 13') soit mû dans ladite cavité (5, 5'), et qu'une potentielle géométrie perturbatrice (28') soit repérée à l'aide dudit élément de préhension (13, 13') ;
d) extraction de ladite bande (6, 6') et dudit élément de préhension (13, 13') hors du trou foré (3, 3') ; et
e) insertion de la barrette (4, 4') dans la cavité (5, 5'), de façon telle que ladite barrette (4, 4') emprisonne la partie structurelle (2, 2') par-derrière.

8. Procédé selon la revendication 7, **caractérisé par le fait qu'**une rotation est imprimée à la bande (6, 6'), à l'étape c), autour de l'axe longitudinal (L₃, L₃) de ladite bande ou autour d'un axe parallèle audit dudit axe longitudinal (L₃, L_{3'}) de la bande.

9. Procédé selon la revendication 8, **caractérisé par le fait qu'**un mouvement est imprimé à la bande (6, 6') le long de la paroi (24, 24') du trou foré.
